(19) Europäisches Patentamt
European Patent Office
Office européen des brevets

(11) **EP 2 570 312 A1**

(12) **EUROPEAN PATENT APPLICATION**

(43) Date of publication:
**20.03.2013  Bulletin 2013/12**

(21) Application number: **11181694.8**

(22) Date of filing: **16.09.2011**

(51) Int Cl.:
*B60T 7/04* (2006.01)     *B60T 7/12* (2006.01)
*B60T 7/20* (2006.01)     *B60T 8/17* (2006.01)
*B60T 8/172* (2006.01)     *B60T 8/1755* (2006.01)
*B60T 8/18* (2006.01)     *B60T 8/32* (2006.01)
*B60T 8/40* (2006.01)     *B60T 13/74* (2006.01)
*B60T 17/22* (2006.01)     *B60T 8/24* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Haldex Brake Products Aktiebolag
261 24 Landskrona (SE)**

(72) Inventors:
• **Nilsson, Anders
  SE-261 45 Landskrona (SE)**
• **Svendenius, Jacob
  SE-226 48 Lund (SE)**
• **Nockhammar, Ola
  SE-237 35 Bjärred (SE)**
• **Seglö, Fredrik
  SE-260 40 Viken (SE)**

(74) Representative: **Hinrichs, Nikolaus Wolfgang
  Rehberg Hüppe + Partner
  Nikolausberger Weg 62
  37073 Göttingen (DE)**

(54) **Method for Controlling a Brake Actuation of a Tractor-Trailer Combination**

(57)     The present invention relates to a method for controlling the brake actuation of a brake system of tractor towing a trailer. The tractor only comprises an electro-mechanical brake system, whereas the trailer comprises a pneumatical brake system. The scope of the control is to keep the coupling force between the tractor and the trailer close to a desired coupling force. The brake force of the electro-mechanical brake actuators is directly measured by measuring the clamp force, the friction force and/or the position of an actuating element moving a brake pad towards a brake disk. On the basis of the measured brake force an approximated vehicle retardation is calculated. Furthermore, the actual vehicle retardation is measured. In case of the approximated vehicle retardation differing from the actual vehicle retardation this difference is taken as an indicator that it is necessary to change the actuation of the trailer brake system and/or the actuation of the electro-mechanical brake actuators of the tractor.

The inventive method is useful for increasing the accuracy of the control of the brake actuation of a trailer and for approximating a desired coupling force between the tractor and the trailer.

EP 2 570 312 A1

**Description**

The present invention relates to a method for controlling the brake actuation of a brake system of a tractor towing a trailer.

**PRIOR ART**

According to one brake control strategy for braking a combination of a towing vehicle, truck or tractor (in the following "tractor") and a trailer the tractor and the trailer are braked with brake forces resulting in the same brake retardations of the tractor and the trailer with a zero coupling force between the tractor and the trailer. For other brake control strategies the coupling force between tractor and trailer is controlled to a given pulling force for the trailer, e.g. for stabilizing the steering dynamics and drive stability of the trailer.

EP 0 433 362 B1 relates to a vehicle combination built with a haulage truck and a semi-trailer both equipped with pneumatic brake systems. The pneumatic brake actuation of the semi-trailer is controlled by a control valve located at the haulage truck. The truck and the semi-trailer are linked by coupling heads for an operating pressure line and a supply line. The control valve for the semi-trailer is designed to emit (in dependence on the operating pneumatic pressure for the brake actuation of the truck) an operating pressure for the semi-trailer which operating pressure can be higher than, lower than or equal to the operating pressure of the truck. The document suggests an additional electronic control unit which is connected to a number of sensors detecting different vehicle parameters, in particular an electrical pressure sensor in the operating pressure line, a retardation or deceleration sensor which during a time sequence detects the speed of rotation of at least one of the wheels or a deceleration sensor made up of a pendulum sensor and an additional sensor detecting the load on a rear axle of the truck. The control unit comprises a memory unit wherein various predetermined values are programmed in for the expected deceleration of the vehicle as a function of the brake pressure of the truck and the axle load of the rear wheels of the truck. From the output signals of the sensors the control unit emits as a function thereof an output signal representing an expected deceleration under the actual conditions. This output signal is supplied to a comparative circuit to which there is also supplied a signal from the deceleration sensor detecting the actual deceleration. The comparative circuit compares these signals and emits an output signal representing the discrepancy. According to this discrepancy, a control member (in particular an electrical stepping motor) modifies the operating pressure which is emitted to the operating pressure line of the semi-trailer. Any adjustment of brake pressures or brake characteristics does not take place until the braking sequence is complete. According to this document, the adaptation process of the applied brake pressures at the tractor and the trailer is intended primarily to take place when the brake pressure is less than a predetermined pressure which is much smaller than the maximum of the brake pressure whereas in case of braking with higher brake pressures no adjustment takes place. Further parameters considered by the adaptation process might be a sensed engine speed, the operation of a retarder, the activation of an automatic brake control system (ABS).

EP 0 697 314 B1 also compares the desired vehicle combination deceleration with the actual measured vehicle deceleration. When detecting discrepancies in a first step, both the pneumatic brake actuation of the tractor and the trailer are modified to the same extent. However, the change of the brake application in this step is limited to a predetermined range dependent on a determined load of the tractor and the trailer. In case of exceeding this threshold during the adaptation process, another adaptation strategy is chosen: Exceeding the threshold is taken as an indicator that the relation between the brake forces at the tractor and at the trailer is to be changed. In steps of 0.05 bar to 0.2 bar the brake force at the trailer is automatically adapted.

DE 196 48 936 B4 relates to an electrically controlled pneumatic brake system for a tractor-trailer combination, wherein the pneumatic brake pressure at the trailer is controlled on the basis of the force equilibrium equation of the vehicle combination from a plurality of sets of measurements.

Also DE 197 39 825 B4 relates to an electro-pneumatic brake system. Here, the brake force distribution to the tractor and to the trailer is modified on the basis of a correction factor. The correction factor is determined throughout one single brake action for a plurality of times. At the beginning of a brake action the correction factor is estimated after a short time interval whereas for ongoing brake action the correction factor is determined with a longer time interval. Also for a plurality of subsequent single brake actuations the correction factors might be determined for increasing time intervals.

There are many uncertainties and error sources when deriving the force equilibrium on the vehicle. The weight of the vehicle must be known, which most often can be quite accurately derived from the air pressure measurement in a vehicle air suspension. However, such information is not available for all trailers. Further forces acting upon the vehicle have also to be estimated. Furthermore, also the tractor brake properties must be known. In modern EBS-systems the pressure in the brake cylinders that creates the force in the brake is measured. From this pressure the brake torque acting at the wheels is predicted. This prediction requires a model or estimation on the pad disk friction and requires that the brake present also works with the predetermined characteristics. However, the brake characteristic of the brake pad material varies during its lifetime. The brake characteristic might heavily change with a changing temperature and/or humidity in the brake or a contamination of the friction surfaces of the brakes. In case that the tractor brakes are not doing as they are assumed to do, the vehicle will not get the retardation as it is supposed to have. The adaptation processes of the prior art as described above basing on the force equilibrium will incorrectly make the trailer to compensate for this by adapting the trailer brake application instead of adapting the tractor brake application.

Further prior art relates to an increase of the modelling and/or monitoring of the tractor brake forces. EP 0 961 722 B1 discloses to identify the brake properties solely for one part of the vehicle combination, so only for the tractor or only for the trailer and then using the identified brake properties for identifying the brake properties of the other part when both braking the tractor and the trailer. Here, the brake parameters are also determined from a deceleration signal. An automatic change of a brake distribution towards a brake actuation only of one single part of the vehicle combination only takes place for selected brake applications where the braking demand is within a pre-set low band and wherein the vehicle is not subject to any substantial steering input and wherein the speed of the commencement of braking is above a pre-set threshold yet below an upper limit which is set by safety considerations. It is also suggested to inhibit the automatic change to a braking action solely of one part of the vehicle combination in case of detecting an ABS operation. Also a learning process might be used considering former identifications and adaptations wherein the learning process might be reset in case of detecting that a trailer coupled to the tractor is changed.

Also according to EP 0 563 596 B1 a brake factor for each brake, a vehicle axle or a part of a vehicle combination is separately determined by automatically changing the brake force distribution during a time sub-interval of the overall brake action time interval.

US 6,139,118 discloses the assessment of the force in the coupling between the tractor and the trailer on the basis of forces measured in the suspension components of at least two axles of the tractor and the changes of such forces occurring during the brake actuation.

## OBJECT OF THE INVENTION

It is the object of the present invention to provide a method for controlling the brake force distribution between a tractor and a trailer.

## SOLUTION

According to the invention, the object of the invention is solved by the features of independent claim 1. Further embodiments of the invention are defined by the features of dependent claims 2 to 8.

## DESCRIPTION OF THE INVENTION

The inventive brake system of a tractor comprises solely electro-mechanical brake actuators, so no pneumatic or electro-pneumatic brake actuators. This relates in particular to the service brake so that the tractor during service brake operation is braked by the electro-mechanical brake actuators only. Whereas it is also possible that a parking brake of the tractor is a pneumatic or electro-pneumatic parking brake actuator or any other known type of parking brake actuator, the present invention also covers an embodiment wherein the parking brake is also an electro-mechanical parking brake actuator.

The inventive use of electro-mechanical brake actuators provides the integration of these upcoming types of brake actuators into the brake system leading to improved brake strategies, in particular related with improved brake stability dynamics and shorter braking distances of the vehicle.

The present invention distinguishes over brake systems wherein the brake system is built by a "hybrid system" consisting both of a circuit with electro-mechanical brake actuators and a circuit with electro-pneumatic brake actuators for providing a redundancy of the brake system of the tractor. Instead, the present invention covers embodiments wherein the brake system of the tractor is built with a plurality of circuits, each circuit being equipped with electro-mechanical brake actuators. One advantage of this embodiment might be that a more accurate control of the trailer brakes can be achieved. This is due to the fact that it is possible to measure or calculate very precisely influencing factors like the clamp force(s) and the pad friction on the trailer (which are unknown in pneumatically actuated systems).

According to the inventive method the brake force of at least one, in particular all of the electro-mechanical brake actuators of the tractor is determined. For such determination any internal or external sensor signal or control signal of the electro-mechanical brake actuators might be used, in particular a control signal controlling the brake application of the electro-mechanical brake actuators. In case of detecting the forces at a plurality or all electro-mechanical brake actuators the determined brake force might be a cumulated brake force for all of the brake actuators or might be determined on the basis of a plurality of partial brake forces each related with one of the brake actuators. On the basis of the determined brake force an approximated vehicle retardation is determined. Here, any algorithm for approximating the vehicle retardation on the basis of an estimated brake force might be used. To name only one example, the determination of the approximated vehicle retardation might be based upon the force equilibrium equation in braking direction. Additionally, for the inventive method the actual vehicle retardation is measured. Here, the actual vehicle retardation might be measured by any type of sensor at any location of the vehicle, wherein the measured actual vehicle retardation might be transferred by a signal line, a CAN or also wirelessly. In a last step of the inventive method, a control signal for the actuation of the trailer brake system and/or a control signal of the electro-mechanical brake actuators is changed. Such change bases on the approximated vehicle retardation and the actual vehicle retardation. Here, any dependency or functional relationship or characteristic diagram for correlating approximated vehicle retardation and the actual vehicle retardation (in particular the difference of these retardations) with the required change of a control signal might be used. To mention only one example as one change or control strategy in case of the approximated vehicle retardation equalling the actual vehicle retardation the control signal is not changed at all, whereas for a difference between the approximated vehicle retardation and the actual vehicle retardation the control signal is changed in dependency on the detected difference of the approximated vehicle retardation from the actual vehicle retardation.

For improving the accuracy of the approximated vehicle retardation, the inventive method might also consider an approximated, predetermined or measured rolling resistance, an air drag and/or a gradient of the road. For this embodiment, the control signal for the actuation of the trailer brake system might be changed in dependence on the rolling resistance, the air drag and/or a gradient of the road.

For determining the brake force of at least one electro-mechanical brake actuator there are many different options that might be used alternatively or cumulatively. In the following only some of the various options are mentioned

According to one embodiment of the invention, the brake force of an electro-mechanical brake actuator of the tractor is determined by means of a sensor. The sensor is located in the force flow between a brake pad and a brake housing in the direction of the friction force. Here, the sensor measures directly the friction force to supply a good approximation of the brake force of this actuator.

For another embodiment of the invention, the sensor is located in the force flow between a brake housing or an electrical drive unit supported at the housing and the brake pad. This sensor is used for providing the clamping force between the brake pad and the brake disc. From the measured clamping force the brake force might be determined on the basis of a coefficient of friction and the brake geometry, wherein the brake geometry is known a-priori and the coefficient of friction might be preset, stored in a characteristic, determined in use and/or adapted throughout the use of the vehicle.

For still another embodiment of the invention, the brake force is determined by means of a position sensor. Here, the position sensor directly or indirectly senses the position of an actuating element of the brake pad or the brake pad itself relative to the brake disc. To mention only some examples, the position sensor might sense the position of an actuating element biasing the brake pad against the brake disc. In case of the brake pad moving parallel to the plane of rotation of the brake disc with increasing brake forces, it is also possible to sense the position of the brake pad parallel to the plane of rotation of the brake disc.

For another embodiment of the invention, the brake force of the electro-mechanical brake actuator of the tractor is determined by means of an electrical signal, in particular a (holding or actuating) current, of an electrical drive unit biasing the brake pad in a direction perpendicular to the plane of rotation of the brake disc.

It is also possible that a dependency of a predetermined control signal of the trailer brake system from a desired brake retardation is modelled by a functional dependency or a characteristic diagram. Such functional dependency or a characteristic diagram might be stored in a memory and might be stored and reloaded and considered by a CPU of the tractor or trailer. However, the control signal is not solely dependent on the functional dependency or the characteristic diagram. Instead, according to the invention the control signal of the trailer brake system for a given desired brake retardation is determined in dependence on the functional dependency or the characteristic diagram and on the basis of at least one correction based on the approximated brake retardation and the actual brake retardation. This might also be done by an adaptation process of the functional dependency or the characteristic diagram. It is also possible that such correction is determined and modified on the basis of an iterative procedure throughout one single brake actuation or over a plurality of brake actuations.

According to one embodiment of the invention the brake force of the electro-mechanical brake actuators (or the wheel brake torque of the tractor) is determined by means of a torque measurement device placed either on the electro-mechanical brake actuators or on the tractor wheel axle. An approximated vehicle retardation is determined on the basis of the determined brake torque of the tractor. The actual vehicle retardation is measured. A control signal for the actuation of a trailer brake system and/or a control signal (brake force signal 67) of the electro-mechanical brake actuators (20) is/are changed on the basis of the approximated vehicle retardation and the actual vehicle retardation.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

## BRIEF DESCRIPTION OF THE DRAWINGS

In the following, the invention is further explained and described with respect to preferred exemplary embodiments illustrated in the drawings.

Fig. 1 is a schematical view of an operating system of a tractor with a pressurized air system and an electro-mechanical brake system.

Fig. 2 schematically shows an alternative embodiment of an operating system with a pressurized air system and an electro-mechanical brake system.

Fig. 3 schematically shows a flow chart for determining a trailer force request in an electro-mechanical brake system.

Fig. 4 schematically shows a flow chart of signals for controlling a motor of a brake actuator.

Fig. 5 shows a pedal characteristic used in a step of the flow chart of Fig. 3.

Fig. 6 shows characteristics for split friction control.

Fig. 7 schematically shows one embodiment for an electro-mechanical brake actuator with the related electronic unit.

Fig. 8 schematically shows a pneumatic brake circuit (prior art).

Fig. 9 schematically shows an electro-mechanical brake circuit with output signals used for determining an estimated brake force.

Fig. 10 schematically shows a free body diagram of a tractor and a trailer.

Fig. 11 shows a schematical block diagram for an inventive method for determining the trailer force request on the basis of a comparison of a predicted retardation and an actual measured retardation.

Fig. 12 shows a characteristic of the trailer brake request over an auxiliary trailer brake request or a retardation demand.

Fig. 13 shows a characteristic of a first correction factor in dependence on a trailer brake request.

Fig. 14 shows a characteristic of a second correction factor in dependence on a trailer brake request.

## DESCRIPTION OF THE DRAWINGS

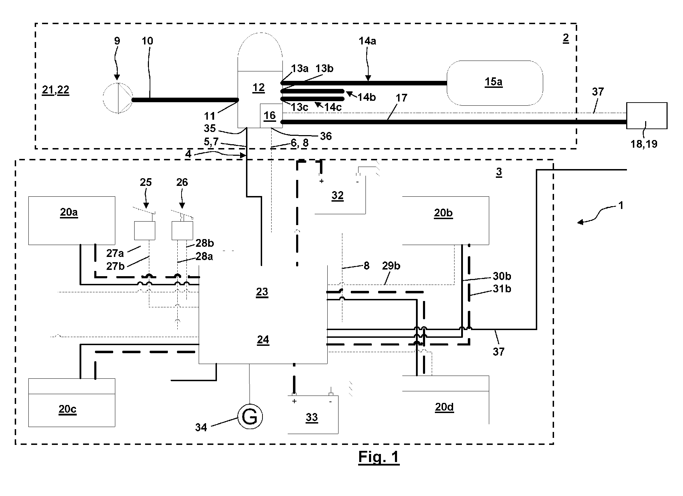

Fig. 1 illustrates an operating system 1 for a utility vehicle comprising a pressurized air system 2 and an electro-mechanical brake system 3. The pressurized air system 2 and the electro-mechanical brake system 3 are coupled with each other by at least one pneumatical and/or electrical interface 4 and related pneumatic and/or electrical lines, plugs, ports and the like. For the embodiment shown in Fig. 1 the interface 4 is used for transferring electrical brake signals 5, 6 of the tractor from the electro-mechanical brake system 3 to the pressurized air system 2 wherein these signals as well as other signals can be transferred uni-directional or bidirectional. For a preferred embodiment the electrical brake signal 5 of the tractor is transferred by a databus 7, whereas the electrical brake signal 6 is transferred by an analog line 8.

In Fig. 1 the pressurized air system 2 is shown in a rough schematical diagram. The person with skill in the art knows the basic way to build pressurized air systems 2 of the present type. The pressurized air system 2 shown in Fig. 1 as an example comprises a compressor 9. Via a supply line 10 the compressor 9 supplies pressurized air to a supply port 11 of an air treatment unit 12. The air treatment unit 12 comprises ports 13a, 13b, 13c connected with consumer circuits 14a, 14b, 14c. At least one consumer circuit 14 comprises a reservoir 15. The air treatment unit 12 supplies pressurized air to the consumer circuits 14. The air treatment unit 12 controls the flow of pressurized air from and to the consumer circuits 14 which might be done by using multiple protection of valves of known types and functions. It is also possible that one reservoir 15a of a specific consumer circuit 14a via the air treatment unit 12 supplies other consumer circuits 14b, 14c which might in particular be the case in specific operating states of the pressurized air system 2 or the related consumer circuits 14. To give only some examples one consumer circuit might be an auxiliary consumer circuit, whereas another consumer circuit might be an air suspension circuit and still another consumer circuit builds a trailer brake circuit. It might also be possible that the pressurized air system 2 also comprises a tractor brake circuit, e.g. a pneumatic service brake for one single axis, a redundant pneumatic service brake and/or a pneumatic parking brake. However, it is also possible that the pressurized air system 2 does not have any pneumatic service brake circuit and any pneumatic parking brake circuit related with the tractor and does not have reservoirs and ports related with a pneumatic brake system of the tractor.

For the embodiment shown in Fig. 1 there is a trailer control valve 16 (in the following also "TCV") integrated into the air treatment unit. The TCV controls the pneumatic actuation and/or supply of a pneumatic trailer brake circuit 17. In particular the TCV controls the supply of pressurized air to the coupling head 18 for the supply of the trailer with pressurized air and/or the coupling head 19 for the control of the trailer brake. The TCV and/or the air treatment unit 12 control(s) these pressurized air signals in dependence on the brake signals 5, 6 of the tractor.

The electro-mechanical brake system 3 comprises electro-mechanical brake actuators 20a-20d. The actuation of the electro-mechanical brake actuators 20a-20d is controlled in dependence on a tractor brake signal applied by the driver to a braking means as a brake pedal. However, it is also possible that the tractor brake signal is (at least in some operating states) automatically created by a control unit. Pairs of brake actuators 20a-20d are associated with each axle. Fig. 1 shows an embodiment with only two axles whereas also a utility vehicle 21, here a tractor 22, might also have more than two axles.

The tractor brake signals controlling the electro-mechanical brake actuators 20a-20d and correlating with the tractor brake signals 5, 6 transferred via the interface 4 to the pressurized air system 2 are created by two redundant brake control units 23, 24 of the electro-mechanical brake system 3. It is possible that the brake control units 23, 24 are built by separate units that might be linked by lines or a network with each other. It is also possible that the brake control units 23, 24 are housed in a common housing or on a common board. Furthermore, it is possible that the brake control units 23, 24 are built by a dual circuit board.

The tractor brake signals 5, 6 are determined or calculated in dependence on the actuation of an actuating means 25 by the driver for the service brake, in particular a brake pedal, and/or an actuating means 26 for a parking brake, here a parking brake lever. The output signals generated by the actuating means 25, 26 according to the actuation by the driver are each transferred by pairs of redundant lines 27a, 27b, 28a, 28b to the two brake control units 23, 24. For one embodiment of the invention the lines 27, 28 are analog lines whereas any other type of line, connection or network might also be used.

The control of the brake actuators 20 will be explained on the basis of the control of one single brake actuator 20b in Fig. 1: both brake control units 23, 24 transfer a tractor brake signal to the brake actuator 20b. For the shown embodiment the brake control unit 23 uses an analog line 29b, whereas the other brake control units 24 uses a databus 30b. Furthermore, the brake actuator 20b is supplied with electrical energy by at least one electric supply line 31 b. This supply with electrical energy is controlled by the brake control unit 23 and/or the brake control unit 24.

For the embodiment shown in Fig. 1 the control unit 23 controls brake actuators 20b, 20c located at different axles at different sides of the vehicle via the analog lines 29b, 29c. The control unit 23 controls the other brake actuators 20a, 20b associated with different axles and different sides of the vehicle via the databuses 30a, 30d. The brake control unit 24 controls the brake actuators 20b, 20c via the databuses 30b, 30c, whereas the brake actuators 20a, 20b are controlled by the brake control unit 24 via analog lines 29a, 29d. The supply of electrical energy to the brake actuators 20b, 20c via the supplied lines 31 b, 31 c is controlled by the brake control unit 24. The supply of electrical energy to the brake actuators 20a, 20d via the supply lines 31 a, 31d is controlled by the brake control unit 23.

The electro-mechanical brake system 3 comprises two redundant batteries or accumulators 32, 33. A first accumulator 32 supplies the brake control unit 23 with electrical energy for transferring the electrical energy to the brake actuators 20a, 20d in a controlled way. The accumulator 33 supplies the brake control unit 24 with electrical energy, in particular for the controlled transfer to the brake actuators 20b, 20c.

The electro-mechanical brake system 3 also comprises a generator 34. The electrical energy generated by the generator 34 is transferred via the brake control units 23, 24 to the accumulators 32, 33 for recharging the accumulators. The mechanical energy transformed by the generator 34 into electrical energy might be taken from the drive train of the utility vehicle 21 or the movement of the utility vehicle 21.

The tractor brake signals 5, 6 transferred to the pressurized air system 2 and the air treatment device 12 or the TCV 16 depend with a given dependency or function or characteristic diagram from the tractor brake signals transferred to the brake actuators 20a-20d and/or from the manual actuation of the actuation means 25, 26 by the driver. The tractor brake signals 5, 6 are created or computed by the brake control units 23, 24 by considering any a-priory dependency or characteristic from the output signal of the actuation means 25, 26.

The tractor brake signals 5, 6 are transferred to the air treatment device 12 and/or the TCV 16 via input ports 35, 36. It is also possible that at least one of the brake control units 23, 24 additionally communicates via an electrical line 37, in particular a databus, with the trailer. furthermore, it is possible that with this electrical line an electrical tractor brake signal is transferred via a suitable interface or plug to the trailer. This embodiment provides to both electrically control the trailer by an electrical control signal transferred via the electrical line 37 as well as to pneumatically control the trailer via the coupling head. This builds a redundant control of the trailer both on an electric path and a pneumatic path. Furthermore, it is possible that the two ways of connecting the trailer with the tractor are used to provide the option of alternatively connecting a pneumatically braked trailer and an electrically braked trailer with one and the same tractor.

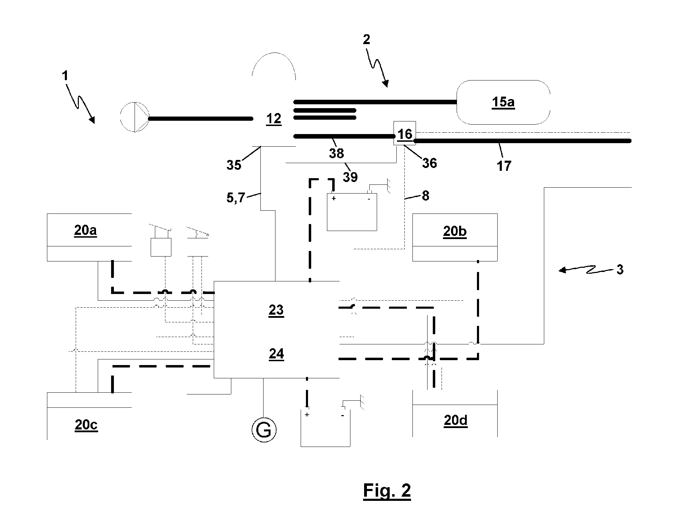

**Fig. 2** shows an embodiment of the operating system 1 similar to the one shown in Fig. 1. However, for the embodiment shown in Fig. 2 the TCV 16 is not integrated into the air treatment device 12 but located separately from the air treatment device 12. For this embodiment the input port 36 for the analog line 8 from the brake control unit 24 is part of the TCV 16. The TCV 16 and the air treatment device 12 are linked by a pneumatic line 38 and by an electrical line 39, in particular a databus communication using the related ports at the air treatment device 12 and the TCV 16. The pressurized air supplied via the pneumatic line 38 is controlled by the trailer control valve 16 in dependence on the signal on the analog line 8 for approximating a suitable pressure in line 17 to be transferred to the trailer.

Further embodiments, functions, explanations, transfers of the electrical signals and pneumatic air streams, methods for the control and the like (in particular concerning the generation of a pressure in the line 17 to the trailer in dependence on the tractor brake signal) can be taken from the European patent application of the applicant Haldex Brake Products GmbH with the title "Druckluftaufbereitungseinrichtung für ein Nutzfahrzeug" filed at the same day as the present European patent application which is incorporated by this reference into the present patent application.

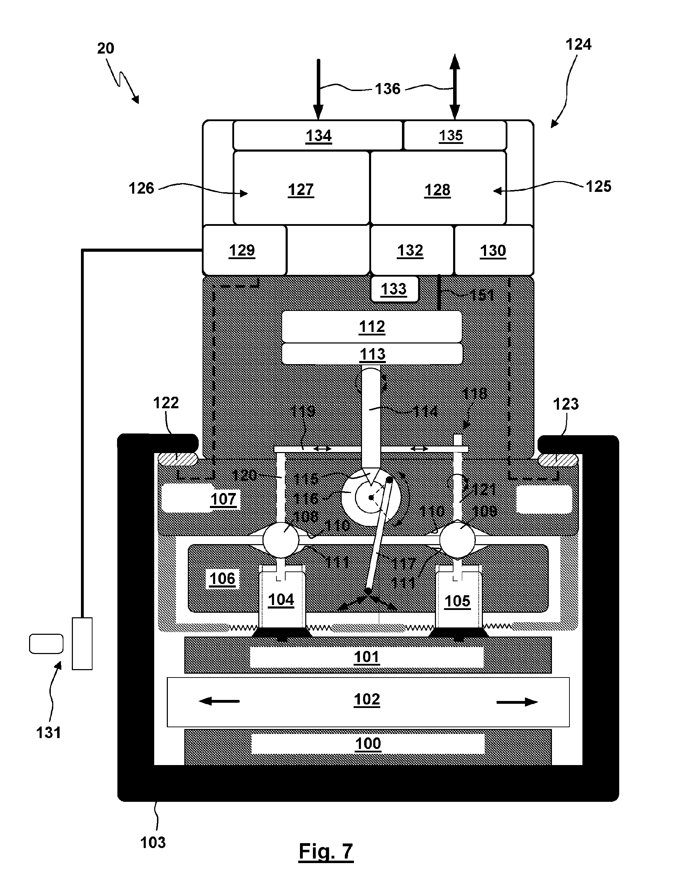

The electro-mechanical brake system 3 for one embodiment of the invention builds a brake-by-wire-system for tractors or trucks, intended for the control of electro-mechanical brake actuators 20 that generate the clamp force by an electric motor 112. The electro-mechanical brake system 3 communicates with the brake actuators 20 via a communication bus, for example FlexRay or CAN and with the actuation means 25, 26, in particular brake pedal sensors, and with the I/O-modules that controls switches and lamps on the dashboard of the tractor 22. The system communicates to the dashboard of the tractor 22 via a diagnostic bus. The brake control unit 24 communicates with the vehicle J1939-bus. The system is redundant. It is possible that it has four brake pedal sensors as well as four sensors on the parking brake handle. Additional, it is possible that there are two FlexRay or CAN communication circuits and two power circuits. Furthermore, the brake control units 23, 24 might be equipped with software for basic brake system functions such as service braking, park braking, automatic brake blending that might control the retarders. Furthermore, logic is included into the brake control units 23, 24 and/or the brake actuators 20 for preventing real lock during service braking and engine brake and excessive wheel spin during acceleration. It is possible that the brake actuators 20 or at least some of them have computational power of their own, see control unit 127, 128 in Fig. 7. It is also possible that a wheel speed sensor 131 is directly connected or integrated into the brake actuator 20. Furthermore, it is possible that the wheel speed controlling functions such as traction control and slip control are performed locally by a control unit 127, 128 integrated into the brake actuator 20.

The brake actuators 20 might be built as disclosed in the documents EP 1 925 841 B1, EP 1 664 571 B1, DE 103 92 252 T5, DE 11 2004 001 812 T5, DE 11 2004 001 795 T5 and DE 11 2006 001 595 T5 of the present applicant.

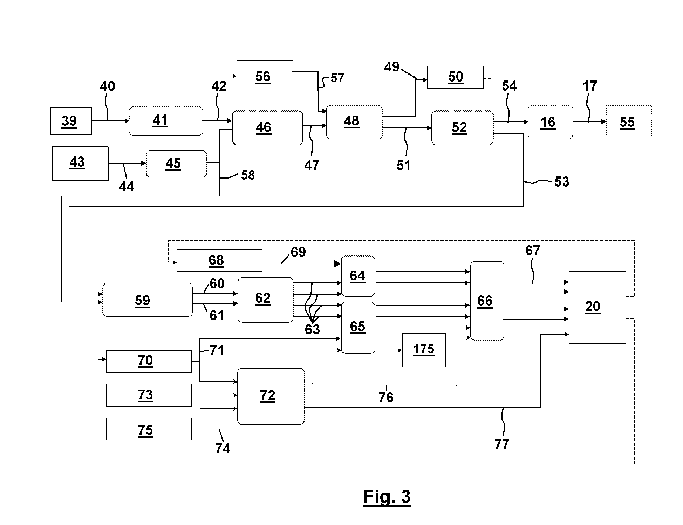

Fig. 3 shows a simplified flow chart relating to the functions of the electro-mechanical brake system 3 and the cooperation with the TCV 16 and the trailer. An actuation means embodied as a pedal sensor 39 creates as an output a position signal 40. In a step 41 the position signal 40 is transformed by the brake control units 23, 24 by considering a pedal characteristic91 to a retardation signal 42. In a parallel path a sensor 43 for the pressure in the air spring bellows or for the level of the air spring bellow outputs a signal 44 according to the sensed level or pressure. From the signal 44 in a step 45 the overall mass including the load of the tractor is determined. In a step 46 the retardation signal 42 former determined in step 41 is transformed under consideration of the overall mass resulting from step 45 to a brake force request 47. In step 48 a brake blending is performed for creating a brake command 49 for a retarder 50 as well as a service brake force request 51 input to a distribution step 52.

The main goal of the retarders 50 is to increase pad and disc life of the brakes as well as to reduce the brake temperatures both on the tractor and on the trailer. With the brake blending performed in step 48, the endurance braking systems are invoked automatically when possible and the function is enabled by putting the retarder stalk arm in "automatic"-position. When the driver commands braking with automatic blending enabled, the brake force request is divided in such a way that both service braking system and endurance braking systems are applied simultaneously. The retarder 50 might be an engine retarder and/or an exhaust retarder. The endurance braking demand value is sent via the J1939 CAN-bus. The brake system is also listening to the response from the retarders on the same bus and corrects the service brake command and trailer brake command such that the demanded retardation will be reached.

The distribution step 52 determines both a tractor brake force request 53 and a trailer force request in dependence on the service brake force request 51. The trailer force request 54 is fed to the trailer control valve 16 creating a pressure in line 17 supplied via the coupling heads to the trailer 55. An output signal of the retarder 50 is used as a control signal and supplied to a step 56 for auxiliary diagnoses creating a retarder brake force signal 57 also input into step 48 for consideration for determining the service brake force request.

The tractor brake force request 53 and a tractor mass signal 58 are input to a step 59 for the axle distribution load apportioning creating a front axle load apportioning signal 60 and a rear axle load apportioning signal 61. The dynamic vertical load distribution on the vehicle axles changes continuously with the cargo position and retardation and braking. The load apportioning function executed in step 59 distributes the brake forces in proportion to the vertical force working on each axle. The mass of the vehicle and the position of the centre of gravity are determined from the air bellow pressure or the air bellow levels. From the vehicle specification the centre of gravity and the weight of the empty truck are known. The extra load on the rear axle is assumed to come from the cargo. The tractor cargo is assumed to be centred along a certain position in longitudinal direction of the factor, while its height increases with the load amount. Then, respective axle load is calculated according to a model using the centre of gravity position, the geometrical data of the vehicle units and the retardation measurements. In a subsequent step 62 the transverse distribution is determined resulting in signals 63 for the left-front-brake-demand, right-front-brake-demand, left-rear-brake-demand and right-rear-brake-demand 63.

Via the units 64, 65, 66 a demand for a brake force signal or brake torque signal 67 is created which is transferred to the brake actuators 20. Unit 65 also generates a signal to be considered by the vehicle engine 175. The brake force created at the brake actuators 20 is indirectly sensed by a clamp force sensor 68. The generated clamp force signal 69 is used by unit 64 for control purposes. In the brake actuators 20 a wheel speed sensor 70 generate a wheel speed signal 71 used for control purposes in unit 65 as well as in a step 72 for estimating the vehicle state. The step 72 also receives signals from an electronical stability control sensor 73 and a steer angle signal 74 from a steer angle sensor 75. Step 72 creates a vehicle motion signal 76 transferred to unit 66 for control purposes and a wheel speed reference signal 77 transferred to the brake actuators 20. The wheel speed reference signal 77 is also transferred for control purposes to unit 65.

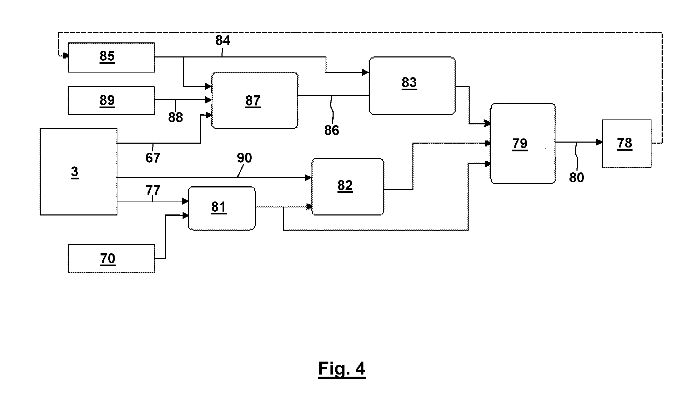

Fig. 4 shows a simplified flow chart of signals and the control in the brake actuators 20 itself with at least one control unit 127,128 integrated into the brake actuators 20 and the related software. In the brake actuator 20 the created brake force depends on the position or the driving activity of an electrical motor 78, 112. A mode handler 79 determines a motor torque signal 80, i.e. the control signal for the motor 78, 112. The motor torque signal 80 is controlled by the mode handler 79 in dependence on the output of a slip calculator 81, a slip controller 82 and a position controller 83. The position controller 83 creates its output from a position signal 84 created by a motor position sensor 85, 113. The position controller 83 besides the position signal 84 considers a position request 86 determined in a step 87 for an elasticity estimation. The step 87 for the determination of the position request 86 considers the position signal 84, a clamp force signal 88 determined by a clamp force sensor 89 (see also 122, 123 in Fig. 7) as well as the brake force signal 67. The slip controller 82 considers a slip request signal 90 from the electro-mechanical brake system 3 or the brake control units 23, 24 and the output of the slip calculator 81 on the basis of the wheel speed reference signal 77 and the output of the wheel speed sensor 70, 131.

As shown in Fig. 1 the brake pedal stroke is transferred to a retardation request, which is recalculated and distributed to the brakes as brake torque requests. It is possible to graduate the braking. The system is designed to be able to give a total braking force of at least 110kN per axle within 0.3 seconds. Due to the redundancy of components and communication between the brake control units 23, 24 and the brake actuators 20, a single fault on the control lines will not effect the service brake performance. Furthermore, the components of the control circuit, in particular the control units 23, 24 and control units 127,128 of the brake actuators 20, have diagnostics and there are means to monitor the transmitted signals such that failure will be detected directly and indicated to the driver. The brake actuators 20 measure the applied brake force and can supervise the condition of the brake pads. A power distribution module (PDM) in the system, in particular in the brake control units 23, 24, supervises the condition of the accumulators 32, 33 and will warn the driver if the function of the system is deteriorated. Even the energy source is redundant in that there are two accumulators 32, 33 dedicated to the electro-mechanical brake system 3. If both accumulators 32, 33 become weak, a power control module can make use of energy from the vehicle battery. It is possible that automatically in case of both batteries being weak unneeded or auxiliary systems are switched of in a given order depending on safety criteria. This is in particular the case if the overall voltage of an accumulator or both accumulators is below a threshold level.

The brake actuators 20 might also receive a parking brake request through the electro-mechanical brake system 3 from the parking brake lever 26 which is placed so that it can be reached from the driver's seat. When the parking brake is applied an electro-magnetic clutch is disengaged and the mechanically stored energy from the parking spring unit is released. The parking spring unit is acting with a constant torque on the motor shaft 114 that applies the brake to a parking brake level to keep the vehicle at standstill by purely mechanical means.

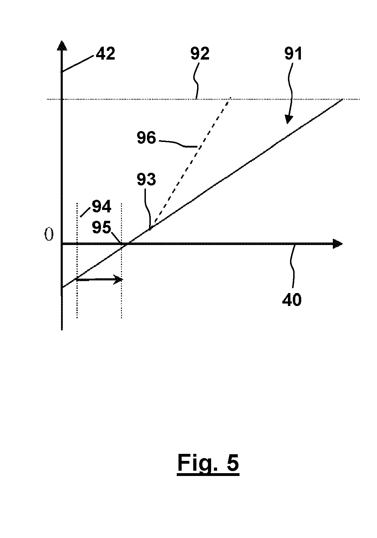

Fig. 5 shows a pedal characteristic 91 describing the retardation signal 42 as a function of the pedal position signal 40. Here, any pedal characteristic 91 with linear, stepped and/or curved dependency might be used. In the pedal characteristic 91 shown in Fig. 5 the retardation is limited to a maximum 92. The pedal characteristic 91 shows for small pedal position signals 41 negative values used for controlling the slack. For a normal brake actuation the pedal characteristic 91 follows the straight line 93. Only in cases when the brake pedal is pressed very fast resulting in a short time interval between the positions 94, 95 the inclination of the pedal characteristic 91 is increased to a second straight line 96 resulting in a lager retardation signal 42.

Within the slip controller 82 wheel lock is avoided by controlling and limiting the wheel slip to prevent vehicle instability during braking particularly under slippery surfaces. The control of the wheel speed is managed locally within each brake actuator 20. The system provides the reference speed (calculated from the estimated vehicle speed) for each wheel and also under some conditions a target slip. The wheel speed sensors 70, 131 are connected directly to respective control units 127,128 and/or to the brake control units 23, 24 to minimize the control and time delays.

The system prevents sudden large brake force differences between the left and right wheels on the front axle due to different road friction under respective wheels, so called split friction. If the friction is low on one side and the driver brakes hard the brake forces may become asymmetrical. The driver may lose the control of the steering wheel and also the entire vehicle. The systems helps the driver to limit the rate for how the left and right brake forces can diverge. If split friction during braking occurs the brake on low friction side will start to control the wheel slip. To the high friction side system limits the brake force demand based on the brake forces on the low friction side. Then, it slowly increases the brake demands to the high friction side. The brake force on the high friction side will be raised to its demand or maximum value, but sufficiently slows so that the driver has time and the possibility to counter steer.

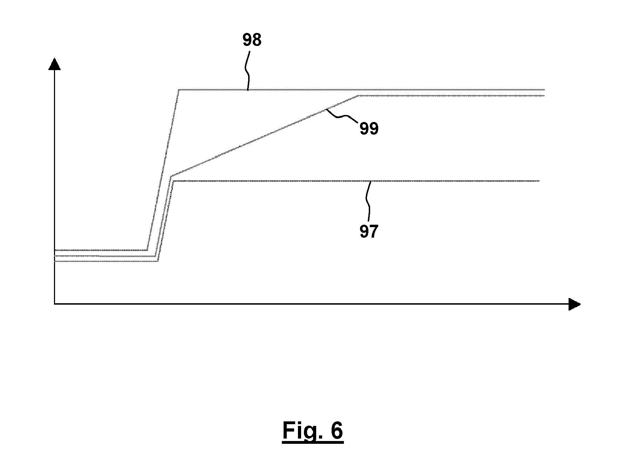

**Fig. 6** shows the brake force over time during split friction. Here, curve 97 shows the physical limit due to low friction at the wheel on low friction road, whereas curve 98 shows the pedal demand correlating with position signal 40. Curve 99 shows the rate limitation to avoid oversteering with in the end the friction at the wheel on high friction road.

The electro-mechanical brake system 3 also may prevent excessive wheel slip when the tractor is accelerating. The wheel control is managed by a local slip controller 82 within respective brake. A controller in the system software limits the accelerating engine torque. Traction control performed by the brakes is an auxiliary function which is according to one embodiment only active if the energy capacity, so the capacity of the accumulators 33, 32, is sufficient. It is also possible, that the brake control is only active below 40km/h. There is a special "off-road" mode on the traction control function that may be commanded by the driver by a push button on the dashboard. The "off-road" mode allows higher slips on the driven wheels.

Engine braking can in slippery conditions and in low gears cause too high brake slip on the driven wheels. To avoid vehicle yaw instability, the system will demand a torque from the engine to control and limit the wheel slip in such occasion. Also a roll-over control and a directional stability control might be integrated in the software of the control units, in particular brake control units 23, 24 and/or control units of the brake actuators 20 itself.

Furthermore, a pad wear monitoring or control might be integrated with the purpose to provide an advance warning to the driver or mechanic of a low pad thickness condition. It is also possible to provide information to the control units relating to pad wear to enable adjustment to the brake distribution to equalize wear. It is also possible to provide an indication of a defective brake (e.g. slide pins stuck). The brakes have a pad wear sensor that measures the position of the brake pads 100, 101 or relative components. In particular the wear sensor measures the position of the adjustment screws or of distance means 104, 105 so that the average wear can be measured over both brake pads 100, 101. If there is a bias of one brake pad 100, 101 over another (due to vehicle operating environment, e.g. an outer pad may always wear more than the other) this may lead to a false reporting of "good brake pads".

It is also possible that operating states of any component or of internal signals are stored so that it is possible to analyse failures later in time.

**Fig. 7** schematically shows a brake actuator 20 basing on a self-amplifying principle. In the brake actuator 20 two brake pads 100, 101 are pressed in an actuating direction corresponding to the axis of rotation of the brake disc 102 in opposite directions against the brake disc 102. It is possible that the brake actuator 20 is fixedly attached to the vehicle chassis which means that the brake disc 102 must have a certain (although limited) axial movability in relation to the brake disc 102, mainly in the practical case in relation to its shaft. However, in other embodiments the brake actuator 20 may be of the so called floating type for cooperation with an axially fixed brake disc 2. The brake pads 100, 101 are attached to brake pad holders (not shown in Fig. 7). Brake pad 100 with the related holder is attached to a brake yoke 103.

By adjustable distance means 104, 105 the brake pad 101 (and the related holder) are attached to a ramp plate 106. The ramp plate 106 is in turn connected to a ramp bridge 107 by means of rollers 108, 109 building a rolling contact with ramps 110, 111 on the ramp plate 106 and the ramp bridge 107, respectively. The rollers 108, 109 are preferably arranged in a common roller cage (not shown) for obtaining full control and completely synchronised movement of the rollers 9 (irrespective of their actual number). The need for a roller cage is especially relevant, if the ramps 110, 111 are curved for obtaining certain brake characteristics.

The ramp bridge 107 is fixedly attached in the vehicle chassis and is provided with means for creating a control force and for maintaining a certain predetermined slack between on one hand the brake disc 102 and on the other hand the brake pads 100, 101.

An electric motor 112 with a transmission 113, in particular a planetary gear, can rotate a motor shaft 114 in either direction. The transmission 113 is used for reducing the rotational speed of the motor 112. It is also possible that the transmission might include a parking and safety brake arrangement.

A bevel gear 115 arranged on the motor shaft 114 is in driving gear engagement with a bevel gear disc 116 rotationally supported by the ramp bridge 107. Eccentrically connected to the bevel gear disc 116 is a crank rod 117 pivotally connected to the ramp plate 106.

By turning the bevel gear disc 116 in either direction by means of the bevel gear 115 from the motor 112, the position of the ramp plate 106 in relation to the ramp bridge 107 can be set. When a friction engagement between the brake pad 101 (and brake pad 100) and the brake disc 102 has been established (over the distance means 104, 105 between the ramp plate 106 and the brake pad holder) an application force amplification will be accomplished by the rollers 108, 109 climbing the respective ramps 110, 111 in response to a tangential movement of the ramp plate 106 caused by the friction engagement with the brake disc 102. The application force may be accurately controlled by rotating the motor 112 in either direction.

By means of motor 112 or an additional motor a slack adjusting arrangement 118 is driven over a drive belt 119, a drive chain or the like. In case of using motor 112 for driving the drive belt 119 an additional transmission, an electromagnetic clutch and a drive sprocket might be arranged in the force flow between the motor 112 and the drive belt 119. In this case the electromagnetic clutch might only be engaged when a slack adjustment is desired. The drive belt 119 drives rods 120, 121 for a rotational movement. However, the driving connection of the rod with the drive belt 119 as well as with other components is designed such that a rotational adjusting movement of rods 120, 121 may be transmitted in spite of relative movements between the ramp plate 106 and the ramp bridge 107. The end regions of the rods 120, 121 opposite to the drive belt 119 are linked with distance means 104, 105 for transferring the rotational movement. The distance means 104, 105 are screwed into the ramp plate 106. Accordingly a rotational movement of the distance means 104, 105 caused by the rotation of the rods 120, 121 leads to a change of the distance of the brake pad 101 (and brake pad 100) from the brake disc 102. Such change of the distance might be used for an adaptation process for decreasing thicknesses of the brake pads 100, 101 due to wear. Two force sensors 122, 123 are located in the force flow between the ramp bridge 107 and the brake yoke 103 in axial direction. The force sensors 122, 123 in a redundant way measure the clamp force so that the signals of these force sensors 122, 123 correlate with the signals of the clamp force sensor 89 in the former figure. The force sensors 122, 123 might be of any suitable kind. The output signal of the sensors 122, 123 can be used for feedback at braking for controlling the electrical motor 112. At the application of the brake actuator 20, as controlled by the motor 112 via the crank rod 117, the brake pads 101, 100 will be applied against the brake disc 102, which can be supposed to be rotating in forward direction in Fig. 7 to the left and in backward direction in Fig. 7 to the right as shown with the arrows. The brake actuator 20 has a self-servo effect, wherein the brake application force will be controlled by the motor 112. The ramp plate 106 with the elements connected there too, for example the brake pad 101, has to be movable to a certain extend in the rotation direction of the brake disc 102 for allowing the rollers 108, 109 to move along the ramps 110, 111.

A torsional moment is created on the brake pad 101 during braking. This moment is striving to rotate or tilt the brake pad 101 around an axis which is parallel to the axis of the brake disc 102 and normally within the friction surface of the brake pad. Care is taken to this moment. A guiding is accomplished for the brake pad 101 and thus for all elements connected thereto, especially the ramp plate 106, while not negatively influencing the movements required for the self-servo effect of the brake actuator 20.

Integrated into the brake actuator 20 is an electronic unit 124. The electronic unit 124 includes two separate parts 125, 126. The parts 125, 126 each comprise a control unit 127, 128 and a sensor interface 129, 130 respectively. The sensor interface 129 receives signals from the force sensor 122 as well as a wheel speed sensor 131. The sensor interface 130 receives the output signal from force sensor 123. The part 125 also comprises a motor interface 132 connected with the motor 112. The motor interface 132 (or the sensor interface 130) of part 125 might also be connected with a position sensor 133 sensing the angular position of the motor 112, an element of the transmission 113, the angular position of motor shaft 114 or other driven elements. The electronic unit 124 comprises an electric power supply 134 and a bus communication 135 both linked by an interface 136 with the brake control units 23, 24.

The geometry of the ramps 110, 111 is optimized for a certain pad-disc-friction-characteristic, which might be optimized so that there is no torque required from the motor 112 to keep the clamp force steady. If the friction is higher than this, the brake becomes self-locking and the motor 112 has to work for releasing the brake pad 100, 101. It is possible that one force sensor 122 is connected to a control unit 127, 128 of the brake actuator 20, whereas the other force sensor 123 is connected with the brake control unit 23, 24. Furthermore, it is possible that the brake actuator 20 has two separated processors or control units 127, 128 for sensor signal processing and control which can validate each other.

For further details concerning possible embodiments of a brake actuator 20 with a self-amplifying effect see related patents of the applicant as DE11 2006 001 595 T5,see also EP1 925 841B1, EP1 664 571 B1, DE103 922 52 T5,DE11 2004 001 812T5,**DE11 2004 001 795 T5**.

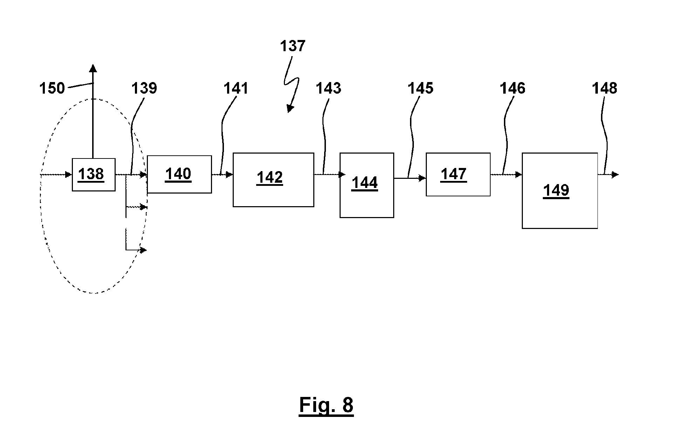

**Fig. 8** schematically shows a conventional pneumatic brake system 137 wherein an EBS control unit 138 creates a pneumatical brake pressure 139. The brake pressure 139 acts on a piston 140 of the pneumatic brake actuator causing a piston force 141 via a brake mechanism 142. The piston force 141 is transformed into a clamp force 143 pressing the brake pad 144 against the brake disc 102 resulting in a frictional force 145 between the brake pad 144 and the brake disc 102. The applicable brake torque 146 depends on the frictional force 145 and the brake geometry 147. Finally, the actual brake force 148 depends both on the brake torque 146 as well as the wheel geometry and the road/tire-friction 149. For prior art pneumatic brake systems 137 the brake force being of interest is estimated on the basis of an output signal 150 of the EBS control unit 138 or the brake pressure 139 measured in a line supplying the brake pressure 139 to the piston 140. The estimated actual brake force 148 depends on a model of the whole chain of the components located between the line with the brake pressure 139 and the actual brake force 148 - in case of any inaccuracies of the used model the estimated brake force differs from the actual brake force 148. It has been observed that deviations might also depend on operational states of the pneumatic brake system 137. To name only some nonlimiting examples linear or non-linear changes in the characteristics of the brake mechanism 142, a change of the brake pad due to wear, a change of the frictional characteristics between the brake pad and the brake disc, changes in the brake geometry 147 and/or changes in the load-tire friction 149 might be a reason for a deviation of the estimated brake force from the actual brake force 148 for these prior art systems.

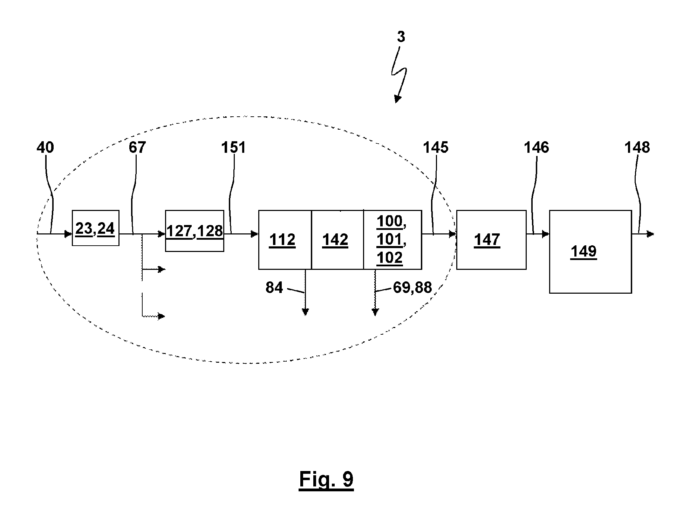

**Fig. 9** schematically shows an electro-mechanical brake system 3 wherein, with additional steps as described above, a brake control unit 23, 24 determines a brake force signal 67 from a position signal 40 of a pedal sensor 39. The brake force signal 67 is transferred to the control unit 127, 128 of a brake actuator 20. The control unit 127, 128 via the interface 132 determines a motor control signal 151 used for controlling the motor 112. The motor 112 via the brake mechanism 142 changes the clamp force 69 between the brake pad 100, 101 and the brake disc 102. As explained for Fig. 8 the frictional force 145 is transformed by the brake geometry 147 to a brake torque 146. The actual brake force results from the brake torque 146 under consideration of the brake and wheel geometry and the road-tire friction 149.

According to the invention the estimated brake force is determined under consideration of the clamp force 69, 88 measured by a clamp force sensor 89 or the two clamp force sensors 122, 123. Any inaccuracies, non-linearities or influencing effects occurring "upstream" in the transfer path of Fig. 9 do not lead to an error in the estimated brake force. Whereas it is also possible that the estimated brake force is solely determined on the basis of the clamp force with a reduced model considering the friction characteristics between the brake pad 100, 101 and the brake disc 102, the brake geometry 147, the wheel geometry and the road-tire friction 149, it is also possible that additionally a position signal 84, the motor control signal 151, an electric control signal in the control units 127, 128, the brake force signal 67, a control signal in the brake control unit 23, 24 and/or a position signal 40 of a pedal sensor 39 is used for estimating the brake force brake torque or for a verification and/or correction or adaptation of an estimated brake force or brake torque.

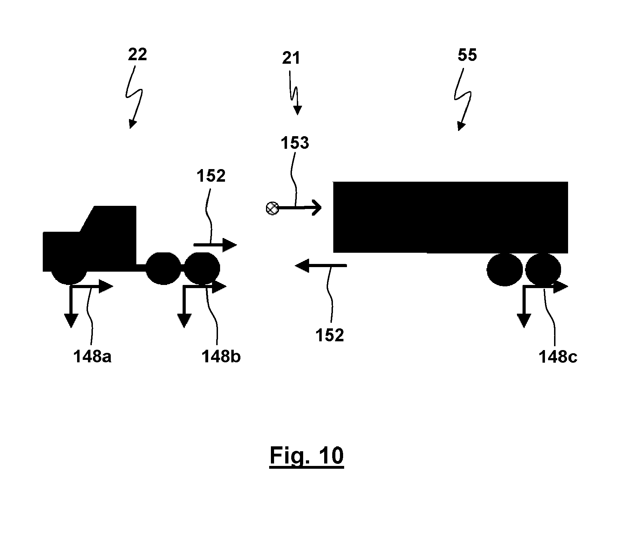

**Fig. 10** shows a free body diagram of a tractor-trailer combination with a tractor 22 and a trailer 55. The free body diagram shows the coupling force 152 between the tractor 22 and the trailer 55, actual brake forces 148a, b, c at the wheel and axles and the inertial force 153.

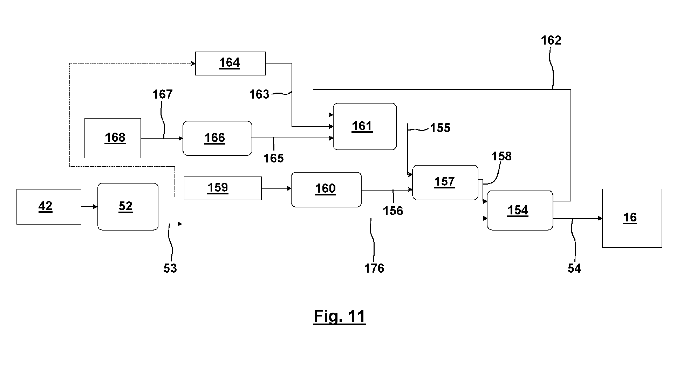

**Fig. 11** shows schematically a block diagram for determining a trailer force request 54 for the trailer control valve 16. The scope is to control the trailer force request 54 such that for a given retardation signal 42 the coupling force 152 equals a desired coupling force, e.g. a zero coupling force. According to Fig. 11 in the distribution step 52 besides the tractor brake force request 53 an auxiliary trailer force request 176 is determined. The auxiliary trailer force request 176 is transformed on the basis of a trailer brake model 154 to the trailer force request 54. The trailer brake model 154 incorporates the dependency of a trailer brake force from a trailer force request 54 transferred to the TCV 16. For an optimal control of the trailer force request 54 a predicted retardation 155 equals the actual measured retardation 156 so that in a trailer brake correction step corrections 158 transferred to the trailer brake model 154 are not necessary or the correction is a zero correction. The actual retardation 156 is determined on the basis of a vehicle motion sensor 159 and a vehicle state estimator 160. The predicted retardation 155 is calculated by a retardation predictor 161 that considers a trailer brake force prediction 162 of the trailer brake model 152 and actual brake forces 163 determined from brake force sensor 164. It is possible that the brake force sensor 164 directly measures a brake force 163 in a brake actuator 20. However, according to a preferred embodiment the brake force 163 is determined on the basis of a measured clamp force 69, 88 (and additional signals as shown and described for the schematic block diagram of Fig 9). Furthermore, the retardation predictor 161 considers the vehicle mass 165 and/or the position of the centre of gravity. These static or dynamic parameters are determined by a vehicle mass estimator 166 from the pressure 167 measured by a bellow pressure sensor 168.

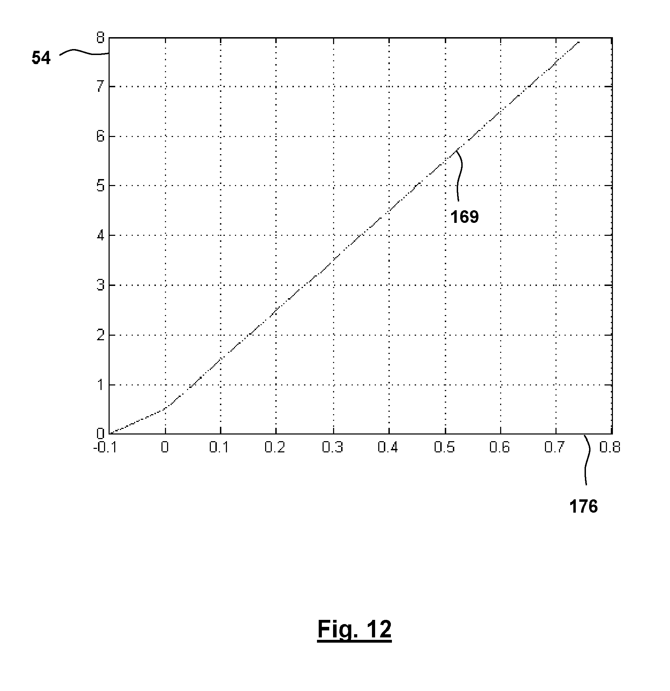

Fig. 12 shows a characteristic 169 with the trailer force request 54 over the auxiliary trailer force request 176. The curvature of the characteristic 169 considers the dependency of an actual brake force at the trailer from the trailer force request 54, i.e. a controlled pressure produced by the trailer control valve 16 and transferred by the coupling head to the pneumatic brake circuit of the trailer. The characteristic 169 is implemented into the trailer brake model 154. When cutting the input of the correction 158 into the trailer brake model 154 the trailer brake request 54 would be solely dependent on the auxiliary trailer force request 176. However, in case of the predicted retardation 155 differing from the actual retardation 156 this difference observed by the trailer brake correction step 157 is used as an indicator that the braking action at the trailer does not have the desired amount which is also an indicator that the coupling force 152 differs from a desired coupling force. According to the amount and/or quality of the correction 158 output from the trailer brake correction step 157 the trailer brake model 154 additionally to the characteristic 169 considers correction factors 170, 171. For one embodiment these correction factors 170, 171 are dependent on the auxiliary trailer brake request 176 or the first approximation of the trailer brake request 54.

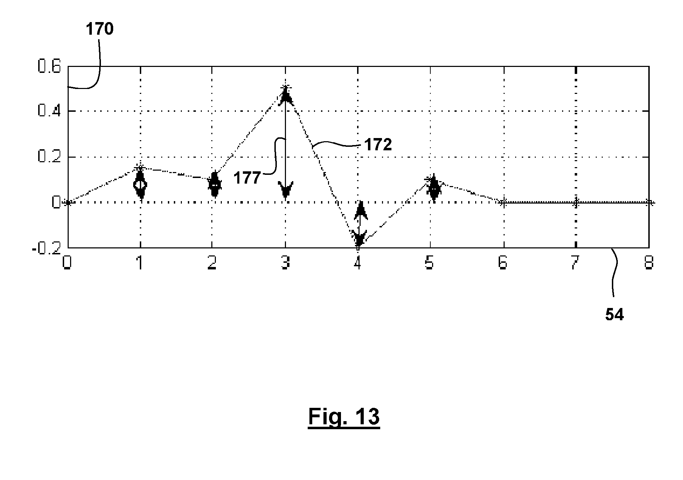

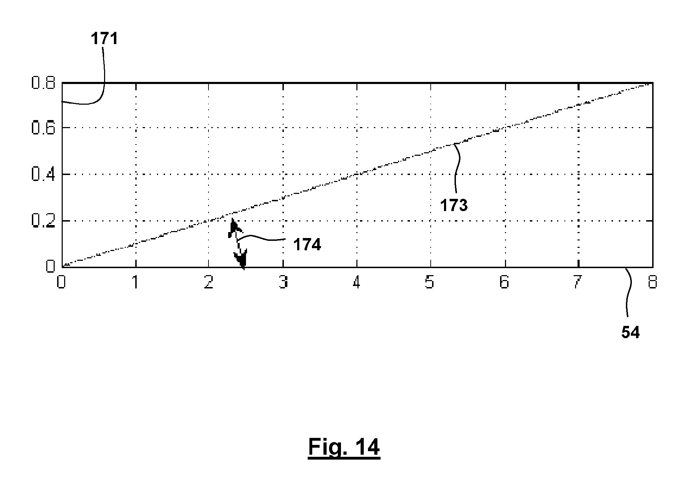

**Fig. 13 and 14** show characteristics 172, 173 of the correction factors 170, 171 on the trailer brake request 54 given as a pressure in bar. Here, the characteristic 172 comprises linear sub-intervals whereas the corners of the characteristic 172 are determined at given brake force requests 54 and the straight lines between the corners are interpolated. Fig. 14 shows a linear characteristic 173 with a given slope 174. It is possible that the characteristics 172, 173 are determined during the us of the vehicle and/or adapted throughout the use of the tractor-trailer combination. However, it is also possible that the characteristics 172, 173 are a-priori given and stored.

The inventive method for controlling the brake actuation of a brake system of a tractor towing a trailer might base on the longitudinal force equilibrium equation. This equation relates the forces working on the tractor and the trailer with the vehicle combination retardation, see Fig. 10. These forces are for instance the rolling resistance, the air drag, gravity if the road has a gradient, the driving and braking forces on the wheels from the brakes or drive train. One simplified longitudinal force equilibrium equation is as follows:

$$m_v a_x = \Sigma \, F_{Tractor, \, i} + F_{Resistance} + m_v g\alpha + F_{Trailer}.$$

The brake forces at the wheels of the trailer $F_{Tractor, \, I}$ according to the invention are determined from the brake actuators 20, in particular under consideration of the clamp force 88. The rolling resistance and the air drag ($F_{Resistance}$) can be estimated during rolling and the road gradient $\alpha$ may be neglected if the function may run for a longer period. On the basis of a comparison of the estimated and the actual retardation in the inventive method the brake request for the brake actuators 20 of the tractor and/or the trailer brake request can be adjusted so that the braking of the tractor-trailer combination gets well harmonized. For a simplification in the inventive method the difference in friction between the two brake pads 100, 101 can be neglected. As shown in Fig. 13 the range of the trailer force request 54 is divided into smaller intervals. To each interval a correction factor 177 is assigned. During braking with a certain retardation signal 42 the correction factor belonging to this interval is updated.

For a preferred embodiment of the invention the longitudinal force equilibrium equation considers a brake force created by at least one retarder 50. The brake force of the retarders 50 can be determined by the retarder itself or can be considered on the basis of the brake command signal 49 or a signal output with the step 48 of brake blending.

For another preferred embodiment the trailer brake request 54 is calculated under consideration of an operating state of the electro-mechanical brake system 3, the actuators 20 and/or the accumulators 32, 33. In case of an indicator signalizing that the electro-mechanical brake system 3 does not work properly it might be helpful to increase the trailer brake request 54 in order to brake the tractor-trailer combination with a larger brake distribution to the trailer. To mention only one example this might be used for operating states wherein the energy status of the accumulators 32, 33 is low.

The above applies both to a vehicle combination comprising a semi-trailer or a trailer which (unlike a semi-trailer) completely supports its own load. Furthermore, the above also applies to a vehicle combination comprising more than one trailer.

The figures 3, 4, 9, 11 disclose methods with a plurality of method steps and/or elements involved. The present invention as claimed with the appended claims might also be embodied in a method incorporating both features of one claim as well as one single step, a combination of some steps or of all steps and/or elements of the before mentioned methods.

In the drawing and the specification at some places different reference numerals have been used for the different embodiments of the same component, the same method step and/or the same force or signal. Despite different reference numerals being used in these cases it is possible to combine features of different figures and embodiments by linking the same elements, method steps, force or signal in one figure with one reference numeral with the corresponding element, method step, force or signal in another embodiment.

## LIST OF REFERENCE NUMERALS

| 1 | operating system |
|---|---|
| 2 | pressurized air system |
| 3 | electro-mechanical brake system |
| 4 | interface |
| 5 | brake signal |
| 6 | brake signal |
| 7 | databus |
| 8 | analog line |
| 9 | compressor |
| 10 | supply line |
| 11 | supply port |
| 12 | air treatment unit |
| 13 | port |
| 14 | consumer circuit |
| 15 | reservoir |
| 16 | trailer control valve (TCV) |
| 17 | trailer brake circuit |
| 18 | coupling head "supply" |
| 19 | coupling head "control" |
| 20 | electro-mechanical brake actuator |
| 21 | utility vehicle |
| 22 | tractor |
| 23 | brake control unit |
| 24 | brake control unit |
| 25 | actuation means |
| 26 | actuation means |
| 27 | line |
| 28 | line |
| 29 | line |

| | |
|---|---|
| 30 | databus |
| 31 | electrical supply line |
| 32 | accumulator |
| 33 | accumulator |
| 34 | generator |
| 35 | input port |
| 36 | input port |
| 37 | electrical line |
| 38 | pneumatic line |
| 39 | pedal sensor |
| 40 | position signal |
| 41 | step |
| 42 | retardation signal |
| 43 | sensor |
| 44 | signal (pressure, level) |
| 45 | step |
| 46 | step |
| 47 | brake force request |
| 48 | step |
| 49 | brake command |
| 50 | retarder |
| 51 | service brake force request |
| 52 | distribution step |
| 53 | tractor brake force request |
| 54 | trailer force request |
| 55 | trailer |
| 56 | step |
| 57 | retarder brake force signal |
| 58 | tractor mass signal |

| 59 | step |
| 60 | front axle load apportioning signal |
| 61 | rear axle load apportioning signal |
| 62 | step |
| 63 | demand |
| 64 | unit |
| 65 | unit |
| 66 | unit |
| 67 | brake force signal |
| 68 | clamp force sensor |
| 69 | clamp force signal |
| 70 | wheel speed sensor |
| 71 | wheel speed signal |
| 72 | step |
| 73 | ESC sensor |
| 74 | steer angle signal |
| 75 | steer angle sensor |
| 76 | vehicle motion signal |
| 77 | wheel speed reference signal |
| 78 | motor |
| 79 | mode handler |
| 80 | motor torque signal |
| 81 | slip calculator |
| 82 | slip controller |
| 83 | position controller |
| 84 | position signal |
| 85 | motor position sensor |
| 86 | position request |
| 87 | step |

| 88 | force signal |
|----|----|
| 89 | clamp force sensor |
| 90 | slip request signal |
| 91 | pedal characteristic |
| 92 | maximum |
| 93 | straight line |
| 94 | position |
| 95 | position |
| 96 | second line |
| 97 | curve |
| 98 | curve |
| 99 | curve |
| 100 | brake pad |
| 101 | brake pad |
| 102 | brake disc |
| 103 | brake yoke |
| 104 | distance means |
| 105 | distance means |
| 106 | ramp plate |
| 107 | ramp bridge |
| 108 | roller |
| 109 | roller |
| 110 | ramp |
| 111 | ramp |
| 112 | electrical motor |
| 113 | transmission |
| 114 | motor shaft |
| 115 | bevel gear |
| 116 | bevel gear disc |

117    crank rod

118    slack adjusting arrangement

119    drive belt

120    rod

121    rod

122    force sensor

123    force sensor

124    electronic unit

125    part

126    part

127    control unit

128    control unit

129    sensor interface

130    sensor interface

131    wheel speed sensor

132    motor interface

133    position sensor

134    electric power supply

135    bus communication

136    interface

137    pneumatic brake system

138    EBS control unit

139    brake pressure

140    piston

141    piston force

142    brake mechanism

143    clamp force

144    brake pad/brake disc

145    frictional force

| 146 | brake torque |
| --- | --- |
| 147 | brake geometry |
| 148 | brake force |
| 149 | road-tire friction |
| 150 | output signal |
| 151 | motor control signal |
| 152 | coupling force |
| 153 | inertial force |
| 154 | trailer brake model |
| 155 | predicted retardation |
| 156 | actual retardation |
| 157 | trailer brake correction step |
| 158 | correction |
| 159 | vehicle motion sensor |
| 160 | vehicle state estimator |
| 161 | retardation predictor |
| 162 | trailer brake force prediction |
| 163 | actual brake forces |
| 164 | brake force sensor |
| 165 | vehicle mass |
| 166 | vehicle mass estimator |
| 167 | pressure |
| 168 | bellow pressure sensor |
| 169 | characteristic |
| 170 | correction factor |
| 171 | correction factor |
| 172 | characteristic |
| 173 | characteristic |
| 174 | slope |

175    engine

176    auxiliary trailer force request

177    correction factor

**Claims**

1.  Method for controlling the brake actuation of a brake system of a tractor (22) towing a trailer (55), the tractor (22) having an electro-mechanical brake system (3), the method comprising the steps of

    a) determining the brake force of electro-mechanical brake actuators (20) of the tractor (22),
    b) determining an approximated vehicle retardation on the basis of the determined brake force of the electro-mechanical brake actuators (20) of the tractor (22),
    c) measuring the actual vehicle retardation,
    d) changing a control signal (trailer force request 54, brake signal 5, brake signal 6) for the actuation of a trailer brake system and/or a control signal (brake force signal 67) of the electro-mechanical brake actuators (20) on the basis of the approximated vehicle retardation and the actual vehicle retardation.

2.  Method of claim 1, wherein the control signal (trailer force request 54, , brake signal 5, brake signal 6) for the actuation of the trailer brake system is changed in dependence on a rolling resistance, the air drag and/or a gradient of the road.

3.  Method of claim 1 or 2, wherein the brake force of the electro-mechanical brake actuator (20) of the tractor is determined by means of a sensor located in the force flow between a brake pad (100, 101) and a brake housing measuring the friction force.

4.  Method of one of claims 1 to 3, wherein the brake force of the electro-mechanical brake actuator (20) of the tractor is determined by means of a sensor (68, 89) located in the force flow between a brake housing and the brake pad (100, 101) measuring the clamp force (88) between the brake pad (100, 101) and the brake disc (102).

5.  Method of one of claims 1 to 4, wherein the brake force of the electro-mechanical brake actuator (20) of the tractor is determined by means of a position sensor (85) directly or indirectly measuring the position of an actuating element of the brake pad (100,101) or the brake pad (100,101) itself.

6.  Method of one of claims 1 to 5, wherein the brake force of the electro-mechanical brake actuator (20) of the tractor is determined by means of an electrical signal, in particular a holding current, of an electrical drive unit (motor 112) biasing the brake pad (100, 101) in a direction perpendicular to the plane of rotation of the brake disc (102).

7.  Method of one of claims 1 to 6, wherein

    a) the dependency of a predetermined control signal of the brake system of the trailer from a desired brake retardation (42, 54) is modelled by a functional dependency or a characteristic diagram and
    b) the control signal (5, 6; 54) of the brake system of the trailer for a given desired retardation (42, 55) is determined in dependence on

      ba) the functional dependency or the characteristic diagram and
      bb) the basis of at least one correction based on the approximated brake retardation and the actual brake retardation.

8.  Method of one of claims 1 to 7, wherein the brake force of electro-mechanical brake actuators (20) is determined by means of a torque measurement device placed either on the electro-mechanical brake actuators (20) or on the tractor wheel axle.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**171**

**173**

**174**

**54**

**Fig. 14**

Europäisches
Patentamt
European
Patent Office
Office européen
des brevets

## EUROPEAN SEARCH REPORT

Application Number

EP 11 18 1694

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 91/09758 A1 (SAAB SCANIA AB [SE]) 11 July 1991 (1991-07-11) | 1,2,7 | INV. B60T7/04 |
| Y | * the whole document * | 3-6,8 | B60T7/12 B60T7/20 |
| X | WO 90/02675 A1 (SAAB SCANIA AB [SE]) 22 March 1990 (1990-03-22) * the whole document * | 1 | B60T8/17 B60T8/172 B60T8/1755 B60T8/18 |
| X | DE 10 2008 028981 A1 (WABCO GMBH [DE]) 24 December 2009 (2009-12-24) * the whole document * | 1 | B60T8/32 B60T8/40 B60T13/74 B60T17/22 |
| Y | US 6 662 906 B1 (BOEHM JUERGEN [DE] ET AL) 16 December 2003 (2003-12-16) * the whole document * | 3-6,8 | B60T8/24 |
| A | DE 42 10 576 C1 (TEMIC TELEFUNKEN MICROELECTRONIC GMBH, 7100 HEILBRONN,DE;MERCEDES-BENZ) 5 August 1993 (1993-08-05) * the whole document * | 1 | |
| A | DE 10 2007 061836 A1 (DAIMLER AG [DE]) 25 June 2009 (2009-06-25) * the whole document * | 1 | TECHNICAL FIELDS SEARCHED (IPC) B60T |
| A | EP 1 459 949 A1 (WABCO GMBH & CO OHG [DE]) 22 September 2004 (2004-09-22) * the whole document * | 1 | |
| A | US 4 231 442 A (BIRKEHOLM MOGENS) 4 November 1980 (1980-11-04) * the whole document * | 1-8 | |

The present search report has been drawn up for all claims

| Place of search | Date of completion of the search | Examiner |
|---|---|---|
| Munich | 23 May 2012 | Ranieri, Sebastiano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 1694

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2012

| Patent document cited in search report | | Publication date | Patent family member(s) | | Publication date |
|---|---|---|---|---|---|
| WO 9109758 | A1 | 11-07-1991 | BR | 9007954 A | 03-11-1992 |
| | | | EP | 0507833 A1 | 14-10-1992 |
| | | | SE | 467204 B | 15-06-1992 |
| | | | SE | 8904417 A | 30-06-1991 |
| | | | WO | 9109758 A1 | 11-07-1991 |
| WO 9002675 | A1 | 22-03-1990 | BR | 8907621 A | 02-07-1991 |
| | | | DE | 68909948 D1 | 18-11-1993 |
| | | | DE | 68909948 T2 | 19-05-1994 |
| | | | EP | 0433362 A1 | 26-06-1991 |
| | | | SE | 462152 B | 14-05-1990 |
| | | | SE | 8803179 A | 10-03-1990 |
| | | | US | 5141292 A | 25-08-1992 |
| | | | WO | 9002675 A1 | 22-03-1990 |
| DE 102008028981 | A1 | 24-12-2009 | NONE | | |
| US 6662906 | B1 | 16-12-2003 | NONE | | |
| DE 4210576 | C1 | 05-08-1993 | DE | 4210576 C1 | 05-08-1993 |
| | | | EP | 0563596 A2 | 06-10-1993 |
| | | | US | 5344222 A | 06-09-1994 |
| DE 102007061836 | A1 | 25-06-2009 | NONE | | |
| EP 1459949 | A1 | 22-09-2004 | DE | 10311838 A1 | 21-10-2004 |
| | | | EP | 1459949 A1 | 22-09-2004 |
| | | | US | 2004183372 A1 | 23-09-2004 |
| US 4231442 | A | 04-11-1980 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0433362 B1
- EP 0697314 B1
- DE 19648936 B4
- DE 19739825 B4
- EP 0961722 B1
- EP 0563596 B1
- US 6139118 A

- EP 1925841 B1
- EP 1664571 B1
- DE 10392252 T5
- DE 112004001812 T5
- DE 112004001795 T5
- DE 112006001595 T5